# EUROPEAN PATENT APPLICATION

(11) **EP 3 653 909 A1**
(43) Date of publication of application: **20.05.2020**
(21) Application number: 18425085.0
(22) Date of filing: 16.11.2018
(51) Int. Cl.: F16H 61/4104, F15B 21/14, F04C 11/00

(54) **HYDROSTATIC TRANSMISSION SYSTEM**

(71) Applicant: Dana Motion Systems Italia S.R.L., 42124 Reggio Emilia (IT)
(72) Inventor: Franzoni, Federica, 42124 Reggio Emilia (IT); Natali, Fabio, 41126 Modena (IT); Sassi, Alessandro, 42124 Reggio Emilia (IT)
(74) Representative: Pfenning, Meinig & Partner mbB

(57) **Abstract**

The present disclosure describes a hydrostatic transmission system that comprises a hydraulic pump and a hydraulic motor. First and second work lines interconnect the hydraulic pump and the hydraulic motor. The first work line is provided for transmission of a hydraulic fluid at a first pressure and the second work line is provided for transmission of the hydraulic fluid at a second pressure, the first and the second pressures being different. A drain line connects the hydraulic motor to a fluid reservoir. A loop flushing valve fluidly connects between the first and second work lines and the hydraulic motor. An impeller fluidly connects between the loop flushing valve and the hydraulic motor. The impeller couples to the drive shaft so as to convert at least some of the energy of the hydraulic fluid outgoing from the loop flushing valve into mechanical power acting on the drive shaft.

## Description

### Technical Field

This disclosure relates to the field of hydraulic transmission systems and, particularly, to the field of hydraulic hydrostatic transmission systems, and more particularly, to the field of energy recovery in hydrostatic transmission systems.

### Background

A hydraulic transmission system involves transmission of power through a pressurization of a hydraulic fluid in a closed loop system. The pressure is supplied by a hydraulic pump and is used to drive a hydraulic actuator. A hydrostatic transmission system generally has a variable displacement main pump that is connected with a hydraulic motor in a closed hydraulic circuit via a high pressure line and a low pressure line. Changing the displacement of the main pump changes the output rate that controls the rotational speed of the hydraulic motor. The hydraulic pump output can also be reversed thereby reversing the directional rotation of the hydraulic motor attached to the main pump. Both acceleration and deceleration of the transmission are controlled by varying the displacement of the hydraulic pump from its neutral position.

Under certain operating conditions a high amount of heat can be generated within the closed hydraulic circuit due to low leakage in the hydraulic pump and the hydraulic motor at low operating loads, thereby, resulting in a small amount of oil being exchanged between the closed hydraulic circuit and a fluid reservoir. Thus, when running hydrostatic transmissions at low pressure loads concurrently with high pump and/or motor speed, there is need to maintain a desired operating temperature of the hydraulic fluid in the closed hydraulic circuit.

Loop flushing valves are used conventionally for flushing of hydraulic fluid from the closed hydraulic circuit. The flushed hydraulic fluid is sent to the fluid reservoir and is replaced by means of a charge pump. The flushing valve that is connected to both the high pressure and low pressure line. The flushing valve is, generally, configured to select the lower pressure line of the two pressure lines in the closed hydraulic circuit.

The removal of hydraulic fluid through results in energy and system efficiency losses. As the hydraulic fluid in the closed circuit is pressurized, circuit flushing flow causes a frictional loss or waste of hydrostatic energy. This loss may require more power from an electric motor or an internal combustion engine.

US9759317 discloses a closed hydraulic circuit between a hydraulic pump and a hydraulic motor that are connected to one another via working lines. A flushing pump is provided in order to feed a pressure medium into the working lines. An output connection of a flushing valve is provided in order to discharge excess pressure medium from the working lines. At least one hydraulic consumer is provided to convert at least some of the volume flow discharged from the hydraulic circuit into mechanical power. The hydraulic consumer is connected downstream of the output connection. The hydraulic consumer may be a hydraulic motor connected in parallel to drive the flushing pump so that less energy is required for operating the flushing pump or the hydraulic pump.

The present disclosure is directed, at least in part, to improving or overcoming one or more aspects of the prior art system. In particular, there is a need for energy recovery from the loss of hydrostatic energy due to the circuit flushing flow.

### Brief Summary of the Invention

The present disclosure describes a hydrostatic transmission system that comprises a hydraulic pump coupled to a drive means; a hydraulic motor having a drive shaft for coupling to a mechanically driven device; a first and a second work lines interconnecting the hydraulic pump and the hydraulic motor wherein the first work line is provided for transmission of a hydraulic fluid at a first pressure and the second work line is provided for transmission of the hydraulic fluid at a second pressure, the first and the second pressures being different; a drain line connecting the hydraulic motor to a fluid reservoir; a loop flushing valve fluidly connected between the first and second work lines and the hydraulic motor; characterized in that it comprises at least one impeller fluidly connected between the loop flushing valve and the hydraulic motor wherein the at least one turbine is coupled to the drive shaft so as to convert at least some of the energy of the hydraulic fluid outgoing from the loop flushing valve into mechanical power acting on the drive shaft.

The hydraulic transmission system enables the recovery of energy due to circuit flushing flow through the impeller.

### Brief Description of the Drawings

The foregoing and other features and advantages of the present disclosure will be more fully understood from the following description of various embodiments, when read together with the accompanying drawings, in which:
Fig. 1 is a hydrostatic transmission system, in a first embodiment, according to the present disclosure;
Fig. 2 is the hydrostatic transmission system of Fig. 1 in a first operation configuration;
Fig. 3 is the hydrostatic transmission system of Fig. 1 in a second operation configuration;
Fig. 4 is a hydrostatic transmission system, in a second embodiment, according to the present disclosure;
Fig. 5 is a hydrostatic transmission system, in a third embodiment, according to the present disclosure;
Fig. 6 is an isometric view of a turbine provided on a drive shaft of a motor with a bent axis piston according to the present disclosure;
Fig. 7 is a sectional view of a turbine provided on a shaft of a motor according to the present disclosure;
Fig. 8 is an isometric view of fluid lines from a flushing valve fluidly connected to a turbine provided on a shaft of a motor according to the present disclosure;
Fig. 9 is an enlarged view of the fluid lines fluidly connected to the turbine of Fig. 8; and
Fig. 10 is an isometric view of a turbine coupled to a drive shaft of a motor with a swash plate according to the present disclosure.

### Detailed Description

This disclosure generally relates to a hydrostatic transmission system that provides for recovery of energy that may be lost during a flushing flow.

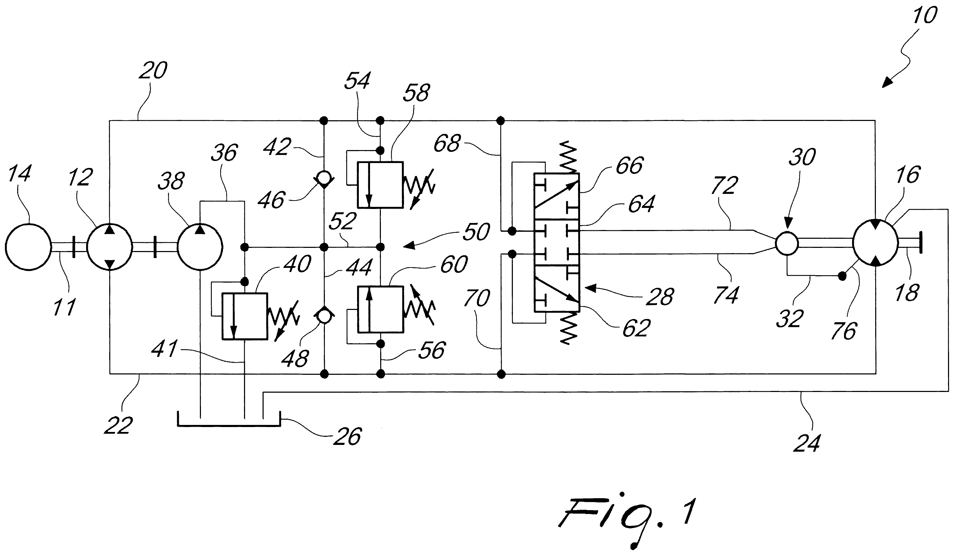

Fig. 1 illustrates a hydrostatic transmission system **10** in a first embodiment. The hydrostatic transmission system **10** comprises a hydraulic pump **12.** The hydraulic pump **12** is coupled to a drive means **14.** The hydraulic pump **12** is driven by the drive means **14.** In an embodiment, the drive means **14** is an electric motor. In an alternative embodiment, the drive means **14** is a conventional engine. The hydraulic pump **12** is coupled to the drive shaft **11** of the drive means **14**.

The hydrostatic transmission system **10** comprises a hydraulic motor **16.** The hydraulic motor **16** has a drive shaft **18** for coupling to a mechanically driven device (not shown). The hydraulic motor **16** is fluidly coupled to and driven by the hydraulic pump **12.**

The hydrostatic transmission system **10** comprises a first work line **20** and a second work line **22**. The first and second work lines **20**, **22** interconnect the hydraulic pump **12** and the hydraulic motor **16**. First and second work lines **20**, **22** are fluidly connected through the hydraulic pump **12** and the hydraulic motor **16**. Hydraulic fluid in the first and second work lines **20**, **22** enable the transmission of energy from the hydraulic pump **12** to the hydraulic motor **16.** The first work line **20** is provided for transmission of a hydraulic fluid at a first pressure. The second work line **22** is provided for transmission of the hydraulic fluid at a second pressure. The first and the second pressures are different.

In a mode of operation, the hydraulic fluid in the first work line **20** is transmitted at a first pressure and the hydraulic fluid in the second work line **22** is transmitted at a second pressure. The first pressure is at a higher value relative to the second pressure. In another mode of operation, the hydraulic fluid in the first work line **20** is transmitted at a second pressure and the hydraulic fluid in the second work line **22** is transmitted at a first pressure. The first pressure is at a higher value relative to the second pressure. The different modes of operation both drive the hydraulic motor **16**. In the first mode of operation the drive shaft **18** is driven in a first direction and in the second mode of operation the drive shaft **18** is driven in a second direction.

The hydrostatic transmission system **10** comprises a fluid reservoir **26**. A drain line **24** connects the hydraulic motor **16** to the fluid reservoir **26**. Hydraulic fluid used to cool the hydraulic motor **16** flows to the fluid reservoir **26** through the drain line **24**.

The hydrostatic transmission system **10** comprises a loop flushing valve **28**. The loop flushing valve **28** is fluidly connected between the first and second work lines **20**, **22** and the hydraulic motor **16**. The loop flushing valve **28** alternatively fluidly connects the hydraulic motor **16** to the first and second work lines **20**, **22**. The loop flushing valve **28** is fluidly connected to the hydraulic motor **16** either through the first flushing line **72** or the second flushing line **74**.

The loop flushing valve **28** is separately fluidly connected to the first and second work lines **20**, **22**. The loop flushing valve **28** is fluidly connected to the first work line **20** through a line **68**. The loop flushing valve **28** is fluidly connected to the second work line **22** through a line **70**. The loop flushing valve **28** comprises three spool positions **62**, **64**, **66**.

In an embodiment, each spool position of the loop flushing valve **28** has four ports. At the first spool position **62**, the loop flushing valve **28** fluidly connects the second flushing line **74** to the first work line **20** through line **68** and fluidly disconnects the first flushing line **72** from the second work line **22**. At the second spool position **64**, the loop flushing valve **28** fluidly disconnects the second flushing line **74** from the first work line **20** and fluidly disconnects the first flushing line **72** from the second work line **22.** At the third spool position **66**, the loop flushing valve **28** fluidly disconnects the second flushing line **74** from the first work line **20** and fluidly connects the first flushing line **72** to the second work line **22** through line **70**.

The hydrostatic transmission system **10** comprises at least one impeller **30**. The at least one impeller **30** is fluidly connected to the loop flushing valve **28** and to the hydraulic motor **16**. The at least one impeller **30** is fluidly connected between the loop flushing valve **28** and the hydraulic motor **16**. Hydraulic fluid from the loop flushing valve **28** flows to the impeller **30** through either the first or the second flushing lines **72**, **74.** The flow of hydraulic fluid acts on the impeller **30**. The direction of force from the flow of the hydraulic fluid acting on the impeller **30** is dependent on the flow of hydraulic fluid either through the first flushing line **72** or the second flushing line **74.** The direction of force from the flow of the hydraulic fluid acting on the impeller **30** is dependent on the spool position **62**, **66** of the loop flushing valve **28.**

The at least one impeller **30** is bidirectionally rotatable. The impeller **30** is rotatable in a first direction. Alternatively, the impeller **30** is rotatable in a second direction. The first direction being opposite to the second direction.

Hydraulic fluid from the impeller **30** flows to the hydraulic motor **16** through a motor line **76.** The impeller **30** is fluidly connected to the motor line **76** through the impeller line **32.** Hydraulic fluid from the impeller **30** passes through impeller line **32** and the motor line **76** to the hydraulic motor **16.**

The at least one impeller **30** is mounted to the drive shaft **18** so as to convert at least some of the energy of the hydraulic fluid outgoing from the loop flushing valve **28** into mechanical power acting on the drive shaft **18.** In an embodiment, the at least one impeller **30** is incorporated in the hydraulic motor **16.** In an alternative embodiment, the at least one impeller **30** is positioned external to the hydraulic motor **16.**

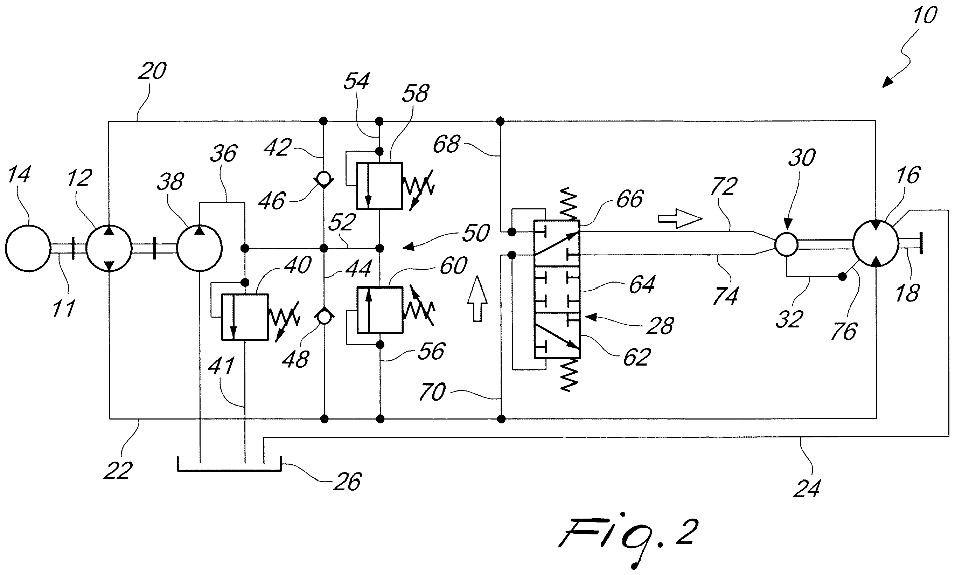

The displacement of the hydraulic flow from the loop flushing valve **28** acts on the impeller **30.** The force acting on the impeller **30** may be used to assist in the rotation of the drive shaft **18.** The spool position may be selected such that the force acting on the impeller **30** is directed along the same rotational direction as the direction of rotation of the drive shaft **18.** Alternatively, the force acting on the impeller **30** may be used to impede the rotation of the drive shaft **18.** With reference to Fig. 2, the impeller **30** may be selectively fluidly connected to the second work line **22** through the loop flushing valve **28.** The loop flushing valve **28** is at the third spool position **66.** The impeller **30** is fluidly connected to second work line **22** through first flushing line **72** and line **70**. The impeller **30** is fluidly disconnected from the first work line **20**. In this first operational configuration, hydraulic fluid flows from the second work line **22** to the at least one impeller **30**.

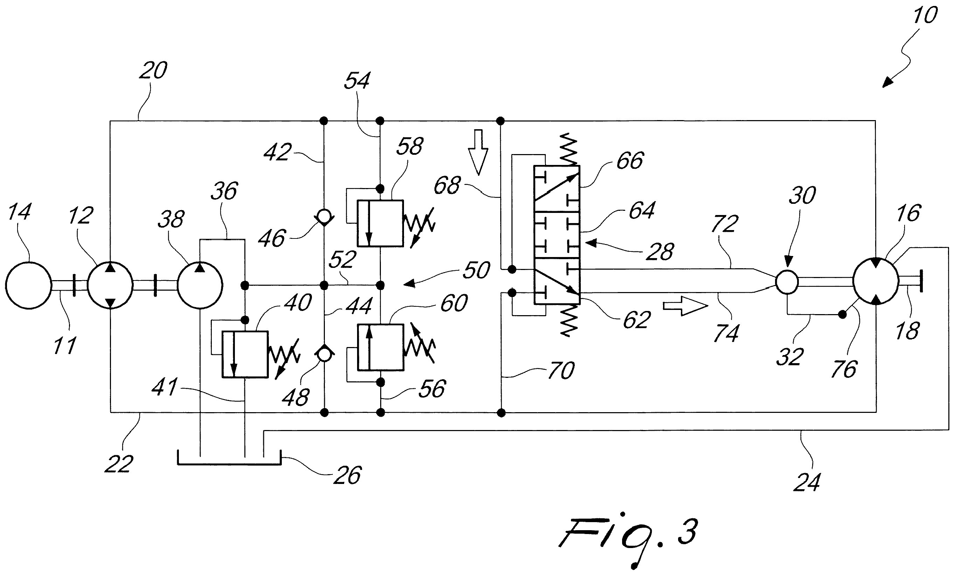

With reference to Fig. 3, the at least one impeller **30** may be selectively fluidly connected to the first work line **20** through the loop flushing valve **28.** The loop flushing valve **28** is at the first spool position **62.** The impeller **30** is fluidly connected to first work line **20** through second flushing line **74** and line **68.** The impeller **30** is fluidly disconnected from the second work line **22.** In this second operational configuration, hydraulic fluid flows from the first work line **20** to the at least one impeller **30.** In an embodiment, the impeller **30** is a turbine.

With reference to Figs. 2 and 3, the hydrostatic transmission system **10** further comprises a booster line **36** connecting the fluid reservoir **26** to the first work line **20** and/ or the second work line **22** for return of hydraulic fluid from the fluid reservoir **26.** Hydraulic fluid from the fluid reservoir **26** is returned to the first work line **20** and/ or the second work line **22** through the return line **36.** The booster line **36** is connected to the first work line **20** through line **42** and connected to the second work line **22** through line **44.** A first check valve **46** is positioned on line **42** to prevent flow of hydraulic fluid from the first work line **20** to the booster line **36** and a second check valve **48** is positioned on line **44** to prevent flow of hydraulic fluid from the second work line **22** to the return line **36.**

The hydrostatic transmission system **10** further comprises a charge pump **38** fluidly connected to the booster line **36.** The charge pump **38** is coupled to the hydraulic pump **12.** The charge pump **38** is configured to be driven by the drive means **14.** The charge pump **38** is driven by the drive shaft **11** of the drive means **14.** Charge pump **38** pumps fluid from the fluid reservoir **26** to the first work line **20** and/ or the second work line **22.**

A line **41** extends from the booster line **36.** A first pressure relief valve **40** is provided on the line **41**. The first pressure relief valve **40** permits flow of hydraulic fluid from the booster line **36** to the fluid reservoir **26** at a predetermined pressure value. Line **41** is connected to the booster line **36** at a position between the charge pump **38** and the respective connections to lines **42**, **44.** In an embodiment, the line **41** is connected between the booster line **36** and the fluid reservoir **26.**

The hydrostatic transmission system **10** further comprises a relief sub-circuit **50** configured to set the maximum pressure in either the first work line **20** or the second work line **22.** The relief sub-circuit **50** comprises a first relief line **52** being connected to the first work line **20** though a second relief line **54** and being connected to the second work line **22** through a third relief line **56.**

The first relief line **52** is configured convey hydraulic fluid from the second and third relief lines **54**, **56** to either the first work line **20** or the second work line **22** whichever work line **20**, **22** having the lower pressure.. A second pressure valve **58** positioned on the second relief line **54** to permit flow of hydraulic fluid from the first work line **20** to the first relief line **52** at a predetermined pressure value. A third pressure relief valve **60** is positioned on the third relief line **56** to permit flow of hydraulic fluid from the second work line **22** to the first relief line **52** at a predetermined pressure value.

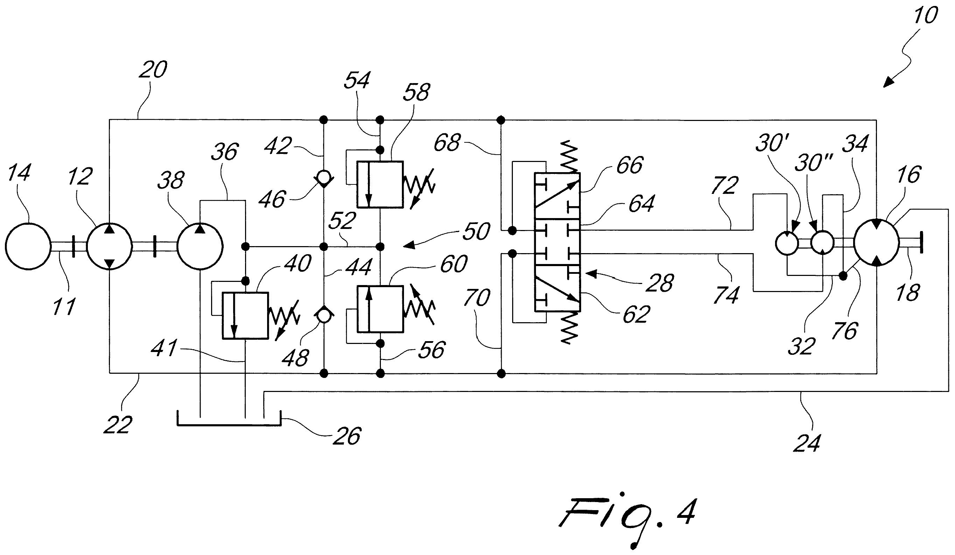

Fig. 4 illustrates a hydrostatic transmission system **10** in a second embodiment. In the second embodiment, there are two impellers **30'**, **30".** All other features hydrostatic transmission system **10** are present as in the first embodiment. The first impeller **30'** is rotatable in a first direction. The second impeller **30"** is rotatable in a second direction. The first direction being opposite to the second direction. In an embodiment, the first impeller **30'** and the second impeller **30"** are both bidirectionally rotatable. In an alternative embodiment, the first impeller **30'** and the second impeller **30"** are both unidirectionally rotatable.

The first impeller **30'** and the second impeller **30"** are independently connected to the loop flushing valve **28.** The first impeller **30'** and the second impeller **30"** are independently connected to the loop flushing valve **28** through either the first flushing line **72** or the second flushing line **74.** The first and second impellers **30'**, **30"** are connected to the motor line **76** through either a first impeller line **32** or a second impeller line **34.** Hydraulic fluid from the loop flushing valve **28** may pass through the first impeller **30'** or the second impeller **30"** to the motor **16.**

In an embodiment, the first impeller **30'** is connected to the loop flushing valve **28** through the first flushing line **72.** The first impeller **30'** may be selectively fluidly connected to the second work line **22** through the loop flushing valve **28** when the loop flushing valve **28** is at the third spool position **66.** The first impeller **30'** is fluidly connected to second work line **22** through first flushing line **72** and line **70**. In this first operational configuration, hydraulic fluid flows from the second work line **22** to the first impeller **30'.**

The second impeller **30"** is connected to the loop flushing valve **28** through the second flushing line **74.** The second impeller **30"** may be selectively fluidly connected to the first work line **20** through the loop flushing valve **28** when the loop flushing valve **28** is at the first spool position **62.** The second impeller **30"** is fluidly connected to first work line **20** through second flushing line **74** and line **68.** In this second operational configuration, hydraulic fluid flows from the first work line **20** to the second impeller **30"**.

In an alternate embodiment, the first impeller **30'** is connected to the loop flushing valve **28** through the second flushing line **74**. The first impeller **30'** is selectively connected to the first work line **20** through the loop flushing valve **28** at the first spool position **62.** The second impeller **30"** is connected to the loop flushing valve **28** through the first flushing line **72.** The second impeller **30"** is selectively connected to the second work line **22** through the loop flushing valve **28** at the third spool position **66.**

In a further embodiment, the first impeller **30'** is fluidly connected to the motor line **76** through the first impeller line **32.** The second impeller **30"** is fluidly connected to the motor line **76** through the second impeller line **34.** In an alternative further embodiment, the first impeller **30'** is fluidly connected to the motor line **76** through the second impeller line **34.** The second impeller **30"** is fluidly connected to the motor line **76** through the first impeller line **32.**

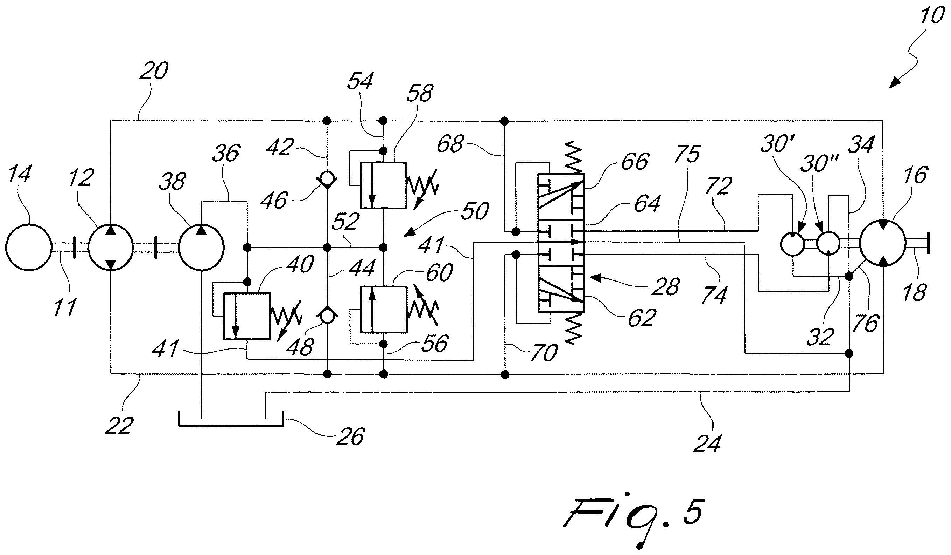

Fig. 5 illustrates a hydrostatic transmission system **10** in a third embodiment. In the third embodiment, the each spool position of the loop flushing valve **28** has six ports. Line **41** connects the return line **36** to the loop flushing valve **28.** The loop flushing valve **28** fluidly connects the first pressure relief valve **40** to the drain line **24** at the second pool position **64.** All other features hydrostatic transmission system **10** are present as in either the first embodiment or the second embodiment.

At the first spool position **62**, the loop flushing valve **28** fluidly connects the second flushing line **74** to line **41** and first work line **20.** At the first spool position **62**, the loop flushing valve **28** fluidly disconnects line **41** from the drain line **24** and fluidly disconnects the first flushing line **72** from the second work line **22.**

At the second spool position **64**, the loop flushing valve **28** fluidly connects line **41** to the drain line **24** through a third flushing line **75**. At the second spool position **64**, the loop flushing valve **28** fluidly disconnects the first flushing line **72** from the second work line **22** and fluidly disconnects the second flushing line **74** from the first work line **20.**

At the third spool position **66,** the loop flushing valve **28** fluidly connects the first flushing line **72** to second work line **22** and line **41**. At the third spool position **66**, loop flushing valve **28** fluidly disconnects the line **41** from the drain line **24** and fluidly disconnects the second flushing line **74** from the first work line **20**. In this embodiment hydrostatic transmission system **10** allows energy recovery also from the hydraulic fluid discharged from the first pressure relief valve **40.**

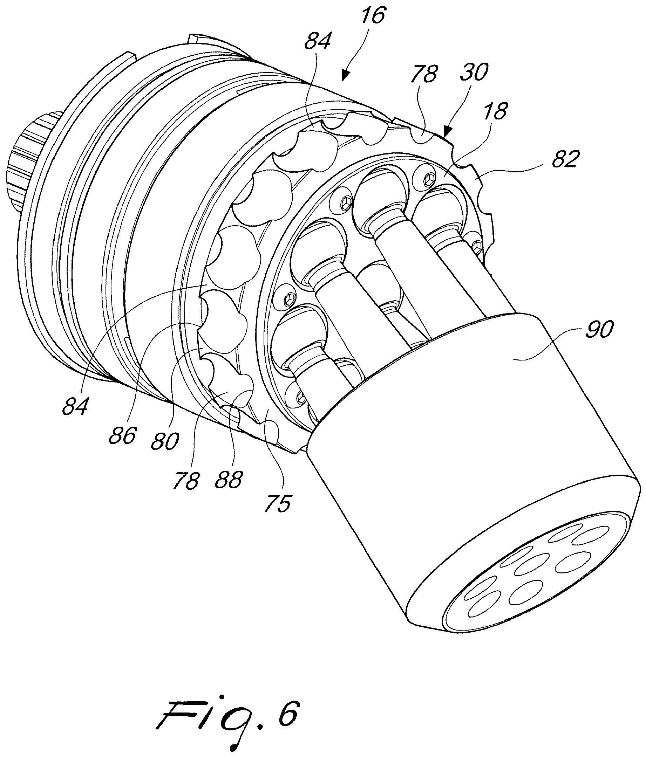

Fig. 6 illustrates the hydraulic motor **16** of a bent axis type incorporating a bidirectional turbine **30.** The turbine **30** is coupled to the drive shaft **18.** Turbine **30** jointly rotates with the drive shaft **18.** Turbine **30** is concentric with the drive shaft **18.** Turbine **30** is coaxial with the drive shaft **18.** The hydraulic motor **16** comprises a bent axis piston **90.** In an embodiment, the turbine **30** is provided on a cylinder block **75.** The turbine **30** is coupled to the drive shaft **18** though the cylinder block **75.** The cylinder block **75** is concentric with the drive shaft **18.** Cylinder block **75** is provided on the external surface of the drive shaft **18**. Cylinder block **75** jointly rotates with the drive shaft **18**. In an alternative embodiment, the turbine **30** is mounted on the drive shaft **18**. The turbine **30** is positioned on the external surface of the drive shaft **18**.

Turbine **30** comprises a series of channels **78**. The longitudinal extension of the channels **78** are aligned with the longitudinal axis of the drive shaft **18**. In an embodiment, the longitudinal axis of each channel **78** is substantially parallel to the longitudinal axis of the drive shaft **18**. In an embodiment, the channels **78** are mutually radially spaced around the cylinder block **75**. The channels **78** are externally positioned and are formed in the cylinder block **75**. In an alternative embodiment, the channels **78** are mutually radially spaced around the drive shaft **18**. The channels **78** are externally positioned and are formed in the drive shaft **18**. The turbine **30** is connected to the drive shaft **18**. Ledges **82** are interposed between the channels **78**. Each ledge **82** separates adjacent channels **78.** Each ledge **82** may have a ledge surface **84**. Each ledge surface **84** extends axially in a direction substantially parallel to the longitudinal axis of the drive shaft **18**. In an alternative embodiment, the ledge surface **84** may be linear. In an embodiment, the ledge surface **84** may have an hourglass shape.

Each channel **78** has an opening **86**. The channels **78** communicates externally of the cylinder block **75** or the drive shaft **18** through the opening **86**. The openings **86** are elongated along the length of the channel **78**. Each opening **86** faces away from the drive shaft **18**. Each opening **86** is directed externally relative to the cylinder block **75** or the drive shaft **18**. A pair of ledge surfaces **84** are positioned on opposite sides of each opening **86**. Each opening **86** is defined by the ledge surfaces **84** at the opposite sides. Each channel 78 has a first aperture **86** and a second aperture **88** at opposite ends.

The cylinder block **75** has an internal surface **90** in contact with the external surface of the drive shaft **18**. The cylinder block **75** is fixedly connected to the drive shaft **18** Each opening **86** faces away from the internal surface **90**.

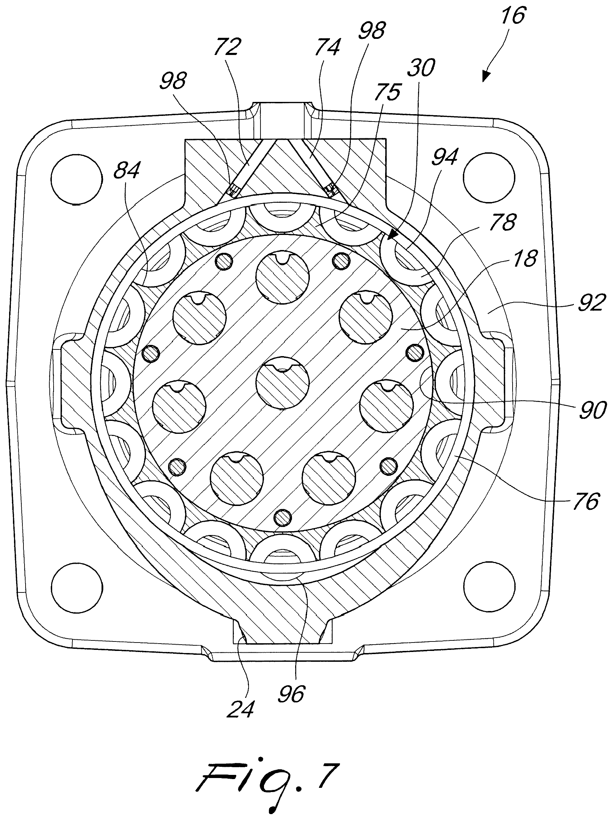

Fig. 7 is a sectional view of the turbine **30** coupled to the drive shaft **18**

The turbine **30** is enclosed in a housing **92**. The openings **86** are covered by a housing internal surface **94**. The first flushing line **72** and the second flushing line **74** are provided in the housing **92**. Throttle valves **98** are provided in the first flushing line **72** and the second flushing line **74** in order to increase the hydraulic fluid flow pressure towards the turbine **30.** The motor line **76** may be a clearance between the housing **92** and the turbine **30**.

The first flushing line **72** and the second flushing line **74** diverge towards the turbine **30.** The first flushing line **72** and the second flushing line **74** are positioned so as to direct hydraulic fluid into the channels **78**. The first flushing line **72** and the second flushing line **74** are positioned over the openings **82**. The first flushing line **72** and the second flushing line **74** are positioned so as to direct hydraulic fluid at the openings **82**.

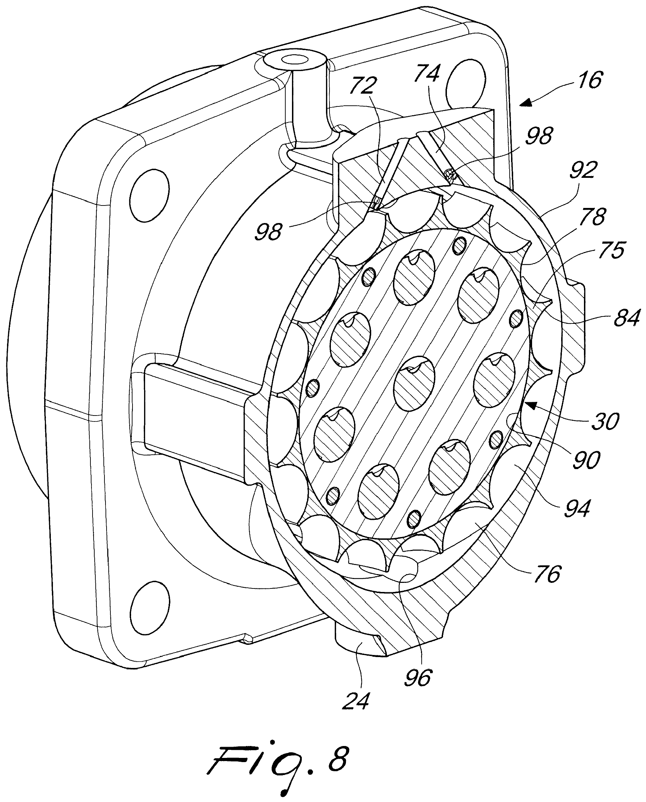

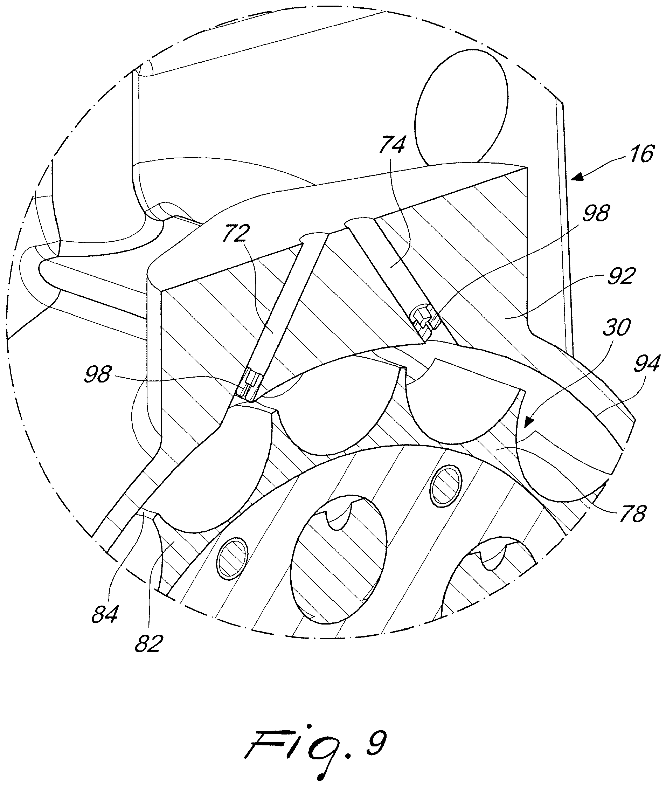

Fig. 8 is an isometric view of fluid lines from a flushing valve fluidly connected to the turbine **30.** The hydraulic fluid from the first flushing line **72** and the second flushing line **74** are directed tangentially relative to the cylindrical body **78**. An aperture **96** is provided in the housing **92** for flow of hydraulic fluid to the motor line **76**. Fig. 9 is an enlarged view of the fluid lines fluidly connected to the turbine **30**.

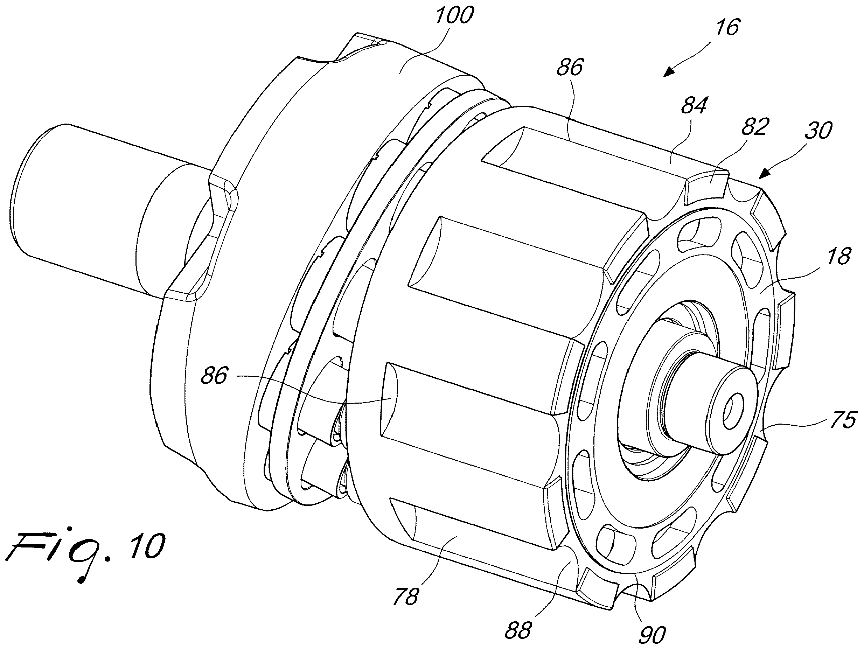

Fig. 10 illustrates the hydraulic motor **16** of a swash plate type incorporating a bidirectional turbine **30**. The turbine **30** is coupled to a drive shaft **18**. Turbine **30** jointly rotates with the drive shaft **18.**

The turbine **30** is positioned on the external surface of the drive shaft **18.** Turbine **30** is concentric with the drive shaft **18.** Turbine **30** is coaxial with the drive shaft **18.** The hydraulic motor **16** comprises a swash plate piston **100.** In an embodiment, the turbine **30** is provided on a cylinder block **75.** The turbine **30** is coupled to the drive shaft **18** though the cylinder block **75.** The cylinder block **75** is concentric with the drive shaft **18.** Cylinder block **75** is provided on the external surface of the drive shaft **18.** Cylinder block **75** jointly rotates with the drive shaft **18.** In an alternative embodiment, the turbine **30** is mounted on the drive shaft **18.** The turbine **30** is positioned on the external surface of the drive shaft **18.** Turbine **30** comprises a cylindrical body **76** having a series of channels **78.** The longitudinal extension of the channels **78** are aligned with the longitudinal axis of the drive shaft **18.** In an embodiment, the longitudinal axis of each channel **78** is substantially parallel to the longitudinal axis of the drive shaft **18.** In an embodiment, the channels **78** are mutually radially spaced around the cylinder block **75.** The channels **78** are externally positioned and are formed in the cylinder block **75.** In an alternative embodiment, the channels **78** are mutually radially spaced around the drive shaft **18.** The channels **78** are externally positioned and are formed in the drive shaft **18**.

Ledges **82** are interposed between the channels **78**. Each ledge **82** separates adjacent channels **78**. Each ledge **82** may have a ledge surface **84**. Each ledge surface **84** extends axially in a direction substantially parallel to the longitudinal axis of the drive shaft **18**. The ledge surface **84** is linear.

Each channel **78** has an opening **86**. The channels **78** communicates externally of the cylinder block **75** or the drive shaft **18** through the opening **86**. The openings **86** are elongated along the length of the channel **78.** Each opening **86** faces away from the drive shaft **18**. Each opening **86** is directed externally relative to the cylinder block **75** or the drive shaft **18**. A pair of ledge surfaces **84** are positioned on opposite sides of each opening **86.** Each opening **86** is defined by the ledge surfaces **84** at the opposite sides. Each channel **78** has an aperture **88** and closed end **86**.

The cylinder block **75** has an internal surface **90** in contact with the external surface of the drive shaft **18**. The cylinder block **75** is fixedly connected to the drive shaft **18** Each opening **86** faces away from the internal surface **90.**

The skilled person would appreciate that foregoing embodiments may be modified or combined to obtain the hydrostatic transmission system **10** of the present disclosure.

### Industrial Applicability

This disclosure describes a hydrostatic transmission system **10** that enables energy recovery from hydraulic fluid removed from the system during the normal operation of the flushing valve. In addition, the hydrostatic transmission system **10** enables having a higher starting torque on the motor **16.** Energy recovery is obtained by means of a turbine that is preferably integrated on the hydraulic motor.

Power, in the fluid, from the flushing valve is used to increase the power available or to reduce the power requested by sending the hydraulic fluid from the flushing valve to the turbine integrated on/coupled to the motor. The impeller **30** is provided directly in the motor **16** thereby enabling a further starting torque when the loop flushing valve **28** is actuated.

Further, the hydraulic fluid from the turbine passes through the motor to the drain line. The passage of the hydraulic fluid cools the hydraulic motor.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A hydrostatic transmission system (10) comprising:
a hydraulic pump (12) coupled to a drive means (14);
a hydraulic motor (16) having a drive shaft (18) for coupling to a mechanically driven device;
a first and a second work lines (20, 22) interconnecting the hydraulic pump (12) and the hydraulic motor (16) wherein the first work line (20) is provided for transmission of a hydraulic fluid at a first pressure and the second work line (22) is provided for transmission of the hydraulic fluid at a second pressure, the first and the second pressures being different;
a drain line (24) connecting the hydraulic motor (16) to a fluid reservoir (26);
a loop flushing valve (28) fluidly connected between the first and second work lines (20, 22) and the hydraulic motor (16);
**characterized in that** it comprises
at least one impeller (30) fluidly connected between the loop flushing valve (28) and the hydraulic motor (16) wherein the at least one impeller (30) is coupled to the drive shaft (18) so as to convert at least some of the energy of the hydraulic fluid outgoing from the loop flushing valve (28) into mechanical power acting on the drive shaft (18).

2. The hydrostatic transmission system (10) of claim 1 wherein the at least one impeller (30) is provided on a cylinder block (75) wherein the drive shaft (18) is configured to jointly rotate with the cylinder block (75).

3. The hydrostatic transmission system (10) of claim 1 wherein the at least one impeller (30) is mounted to the drive shaft (18).

4. The hydrostatic transmission system (10) of claims 1, 2 or 3 wherein the at least one impeller (30) is bidirectionally rotatable, the at least one impeller (30) being rotatable in a first direction and in a second opposite direction.

5. The hydrostatic transmission system (10) of claims 1, 2 or 3 comprising a first impeller (30') and a second impeller (30") wherein the first impeller (30') is rotatable in a first direction and the second impeller (30) is rotatable in a second direction.

6. The hydrostatic transmission system (10) of any one of preceding claims further comprising a booster line (36) for returning hydraulic fluid from the second and third relief lines (54, 56) to either the first work line (20) or the second work line (22), whichever work line (20, 22) having the lower pressure.

7. The hydrostatic transmission system (10) of claim 6 wherein a charge pump (38) is provided on the booster line (36).

8. The hydrostatic transmission system (10) of claim 7 wherein the charge pump (38) is coupled to the hydraulic pump (12), the charge pump (38) is configured to be driven by the drive means (14).

9. The hydrostatic transmission system (10) of any one of preceding claims 6 to 8 further comprising a line (41) extending from the return line (36), a first pressure relief valve (40) being provided on line (41) wherein the line (41) is connected between the booster line (36) and the loop flushing valve (28), the loop flushing valve (28) fluidly connecting the drain line (24) to the first pressure relief valve (40) at a second pool position (64).

10. The hydrostatic transmission system (10) of any one of preceding claims wherein the at least one impeller (30) is fluidly connected to the first work line (20) through the loop flushing valve (28), the loop flushing valve (28) being at a first spool position (62).

11. The hydrostatic transmission system (10) of any one of preceding claims wherein the at least one impeller (30) is fluidly connected to the second work line (22) through the loop flushing valve (28), the loop flushing valve (28) being at a third spool position (66).

12. The hydrostatic transmission system (10) of any one of preceding claims wherein the at least one impeller (30) is integrated in the hydraulic motor (16).

13. The hydrostatic transmission system (10) of any one of preceding claims wherein the hydraulic motor (16) is either of the bent axis type or of the swash plate type.
